# EUROPEAN PATENT SPECIFICATION

(11) **EP 1 319 155 B1**
(45) Date of publication and mention of the grant of the patent: **10.05.2006**
(21) Application number: 01967918.2
(22) Date of filing: 20.09.2001
(51) Int. Cl.: F24D 19/10, F24D 3/08

(54) **DISTRICT HEATING ARRANGEMENT, LOCAL UNIT OF A DISTRICT HEATING ARRANGEMENT, CONTROL UNIT FOR SAID LOCAL UNIT AND METHOD OF OPERATING A DISTRICT HEATING ARRANGEMENT**
FERNHEIZUNG, HAUSANSCHLUSS DAFÜR, KONTROLLE FÜR DIESEN HAUSANSCHLUSS UND VERFAHREN ZUM BETREIBEN DIESER FERNHEIZUNG
SYSTEME DE CHAUFFAGE CENTRAL, UNITE LOCALE D'UN SYSTEME DE CHAUFFAGE CENTRAL, UNITE DE COMMANDE DE CETTE UNITE LOCALE ET PROCEDE DE FONCTIONNEMENT D'UN SYSTEME DE CHAUFFAGE CENTRAL

(30) Priority: 22.09.2000 SE 0003395
(43) Date of publication of application: 18.06.2003
(73) Proprietor: Alfa Laval Corporate AB, 22100 Lund (SE)
(72) Inventor: ENANDER, Anders, Patrik, Torbjörn, S-413 28 Göteborg (SE); ENGSTRÖM, Jan, Anders, Ake, S-371 40 Karlskrona (SE); HELIN, PerOla, Magns, S-372 36 Ronneby (SE); LARSSON, Jan, Erik, S-372 37 Ronneby (SE); PERSSON, Mats, Henrik, S-372 39 Ronneby (SE)
(74) Representative: Berglund, Stefan
(86) International application number: PCT/SE2001/002019
(87) International publication number: WO 2002/025176

(56) References cited:
- DE-A1- 3 539 328
- DE-A1- 19 830 686
- FR-A1- 2 762 470
- US-A- 5 622 221

## Description

### THE BACKGROUND OF THE INVENTION AND PRIOR ART

The present invention refers to a district heating arrangement, a control unit set and a method for operating a district heating arrangement.

District heating arrangements are normally controlled via the central heat-producing unit by means of the temperature of the exiting hot primary fluid and the return temperature, i.e. the temperature of the primary fluid when it returns to the heat-producing unit. Furthermore, the central unit controls the arrangement by means of the differential pressure, i.e. the pressure of the exiting primary fluid in relation to the pressure of the incoming primary fluid. Each of the local units then controls its secondary circuit per se and as there always is an unlimited supply of primary fluid. Such a way of controlling a district heating arrangement is not always optimal and creates no possibilities to level out the load over the time, i.e. in the arrangement there appear large variations in the effect need. In order to meet the frequent, effect peaks of short duration, which thereby arise, the heat-producing unit has to operate with large load adjustments, which is expensive, since the heat-producing unit lacks possibilities to control the effect need of the local units. From the perspective of the local unit, a lower cost for the heat energy also could be obtained if the local unit had the capability of adjusting its effect need in such a way that the total effect of the arrangement lies at a as constant level as possible.

The local units may operate in a plurality of various manners but they are in general arranged to provide heat for heating, either directly with the primary fluid that enters the local unit or via a secondary circuit of the local unit. The local unit is also in general arranged to provide heat tap water by means of a heat exchanger, through the primary side of which the hot primary fluid from the central unit flows.

SE-B-334 725 discloses a local unit for a district heating arrangement. The local unit includes a number of radiators, which are intended to receive the hot primary fluid from a heat-producing unit, and a heat exchanger for producing hot tap water. Furthermore, the local unit includes a preference connection in order to enable a local bypassing of the radiators of the unit concerned in order to meet load peaks of hot tap water.

SE-B-367 053 discloses another local unit with a first heat exchanger for heating and a second heat exchanger for producing hot tap water. Also this document describes a preference connection for enabling a local bypass connection of the radiators of the unit concerned in order to meet load peaks of hot tap water.

In a publication from Fjärrvärmeföreningen called DYNAMISKA VÄRMELASTER FRAN FIKTIVA VÄRMEBEHOV, FOU 1997:10, by Sven Werner, the problems mentioned above are indicated. This publication indicates a possibility of solving these problems by providing a communication in two directions between the central hot producing unit and each local unit. It would give new control possibilities for different operation situations. It would also make it possible for the central heat-producing unit to control the supply of primary fluid to the different local units in response to the flow through these units.

US-A-5, 622, 221 discloses a heating arrangement for a building and includes a central furnace, a number of heating zones, and a hot water tank. Each heating zone includes a separate pump (zoning circulator), which is controlled by a local control unit. Each zone also includes a priority device including a priority switch which is manually adjustable to a priority position and a non-priority position. The zones and the various components are connected to each other via a bus, which enables communication of the adjusted priority positions. It is thus these manual priorities that control whether a pump of a heating zone, for instance is to be active or not. US-A-5, 622, 221 discloses no independent local control with regard to any parameter defining a measurement of the effect need of different local units. In US-A-5, 622, 221, the control of the local heating zone thus seems to be performed in such a way that the pump is started if a local need is present under the condition that the priority gives permission thereto. At the same time units which have no priority are prevented from being activated.

### SUMMARY OF THE INVENTION

The object of the present invention is to overcome the problems mentioned above and to provide improved possibilities to control a district heating arrangement.

This object is obtained by the district heating arrangement defined in claim 1, the control unit set defined in claim 19, and the method of operating a district heating arrangement defined in claim 20.

In such a way it is possible for a local unit to adapt its own effect consumption also with respect to the effect consumption of other local units in the district heating arrangement. This is an advantage also if only two local units of a very large number of local units of the district heating arrangement are provided with such communication possibilities. The district heating arrangement frequently includes sub-networks, which are included as a part of the conduit network and the closed circuit. The invention is especially favourable in such a case with two adjacent local units, i.e. two units, which are located in such a common sub-network of the district heating arrangement. It is to be noted that said parameter does not need to be the same parameter for different local units in the district heating arrangement. It means that a local unit, for instance, may be controlled with respect to different parameters from different local units.

According to an embodiment of the invention, said second means includes at least a flow-influencing member for influencing the flow of the hot primary fluid through the local unit. Advantageously, the flow-influencing member may then be arranged to reduce the flow of the hot primary fluid through the first local unit if said parameter for the second local unit indicates an increasing need of hot primary fluid at this second unit. In such a way, a levelling of the total effect consumption of the district heating arrangement is obtained. The required peak effect may also be reduced and thereby it is possible to connect more local units to a present district heating arrangement without the need of increasing the effect of the central heat-producing unit. Furthermore, the total pressure difference of the district heating arrangement may be kept at a substantially constant level.

According to a further embodiment of the invention, the heat exchanger device includes a first heat exchanger for a first secondary circuit for heating and a second heat exchanger for a second secondary circuit for the production of hot water, wherein said second means includes a first flow-influencing member, such as a control valve, for influencing the flow of the hot primary fluid through the first heat exchanger and a second flow-influencing member, such as a control valve, for influencing the flow of the hot primary fluid through the second heat exchanger. Advantageously, at least the first flow-influencing member of the first local unit may then be arranged to reduce the flow of the hot primary fluid through the first heat exchanger for heating if said parameter for the second local unit indicates an increasing need of hot primary fluid at this second unit. Also if the energy supply to the secondary circuit for heating is reduced during a time period, this will hardly be experienced as a disadvantage since the building structure of the house to be heated, for instance, has a possibility to store heat and in such a way the temperature will not sink remarkably during such a period.

According to a further embodiment of the invention, said parameter is related to the size of the flow of the hot primary fluid through the heat exchanger device. In that connection, said first means may include a member for providing a valve position of the control valve, which is a measure of said size of the flow of the hot primary fluid, wherein said parameter is related to the valve position. It is also possible to provide a flow meter for direct measurement of the flow of the hot primary fluid through the heat exchanger device of the local unit. Another possibility to determine the size of the flow is to measure the differential pressure over the heat exchanger device of the local unit.

According to a further embodiment of the invention, said first means includes a sensor for sensing a temperature, wherein said parameter is related to the sensed temperature. For instance, it is possible for a number of adjacent local units to use only one temperature sensor for sensing the outdoor temperature and to communicate this sensed outdoor temperature between the local units. It is also possible to communicate other temperatures, which are related to the indoor temperature of the local units, the temperatures of the entering and exiting primary fluid with regard to the local units, etc.

According to a further embodiment of the invention, said first means includes pressure sensors for sensing a pressure difference between the primary fluid entering the local unit and the primary fluid exiting from the local unit, wherein said parameter is related to this pressure difference. Said second means may then include a flow-influencing member in the form of a pump for circulation of the hot primary fluid. The control unit of the first local unit may thus be arranged to influence the control of the pump with respect to said parameter of the second local unit in such a way that the size of the flow of the primary fluid through the pump for these two local units is controlled towards a desired value. Hence, the invention creates possibilities to optimise in an easy manner the total pressure difference of the district heating arrangement. An economical operation of the pumps in the district heating arrangement is thus ensured.

According to a further embodiment of the invention, also the central unit includes a communication device, which is arranged to permit communication in two directions with at least one of said first and second local units. Thereby, at least one of said two local units may be arranged to communicate said parameter for at least one local unit to the central unit. Possibly, a local unit may receive the valve positions or any other parameter from adjacent local units and communicate the valve positions or other parameters from these adjacent local units in a processed or unprocessed form to the central unit. Such a communication in two directions with regard to the central unit also creates possibilities for a central control of, for instance, the control valves for the primary fluid or a pump for the primary fluid in a sub-network.

According to a further embodiment of the invention, said communication devices include means for communication by means of radio waves. Especially, the communication devices may include means for communication via a mobile telephone network. Preferably, the communication devices include means for communication via a computer network such as Internet . Furthermore, said communication devices may advantageously include means for communication via a network for distribution of electricity.

### BRIEF DESCRIPTION OF THE DRAWINGS

The present invention is now to be explained more closely by means of a description of different embodiments and with reference to the drawings attached.
Fig 1 discloses schematically a district heating arrangement according to the invention.
Fig 2 discloses more closely a local unit according to a first embodiment of the district heating arrangement in Fig 1.
Fig 3 discloses more closely a local unit according to second embodiment of the district heating arrangement in Fig 1.

### DETAILED DESCRIPTION OF VARIOUS EMBODIMENTS OF THE INVENTION

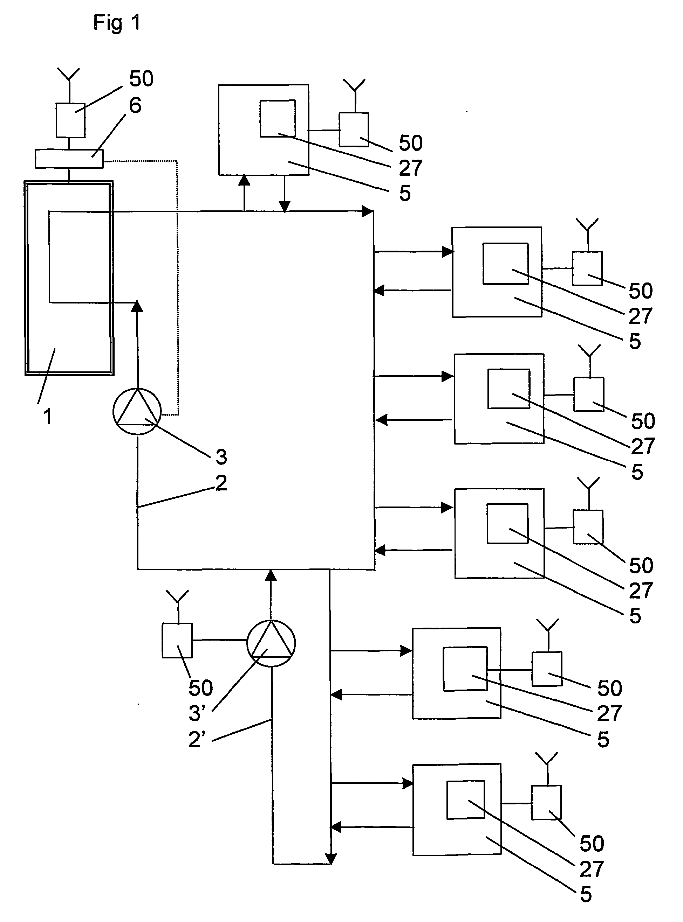

Fig 1 discloses a district heating arrangement including a heat-producing central unit 1 for providing a hot primary fluid. The central unit 1 may include a heating-plant or a combined power and heating plant, which produces energy by oil firing, for instance. However, the central unit may be any unit, which provides a hot medium, for instance waste heat from any industrial process.

The district heating arrangement includes also a schematically disclosed conduit network 2, which extends in a closed circuit via the central unit 1. In a manner known per se, the conduit network 2 may include different sub-networks 2', which all are included in the closed circuit. For instance, the conduit network 2, 2' may include two parallel pipe conduits, one for feeding hot primary fluid to the different local units 5 and one for the return flow of primary fluid from the local units 5 to the central unit 1. The district heating arrangement may also include subordinate networks (not disclosed) closed per se, which are connected to the conduit network 2 or the sub-network 2' via a heat exchanger. The fluid in such a subordinate network is thus separated from the primary fluid. The district heating arrangement according to the invention may also be such a subordinate network, wherein the heat-producing central unit is the heat exchanger mentioned above. The district heating arrangement according to Fig 1 also includes at least one pump 3 for circulating the hot primary fluid via the conduit network 2, 2'. The different sub-networks 2' may also include separate circulation pumps 3' for the circulation in the sub-network 2' concerned.

To the conduit network 2, 2' of the district heating arrangement, a number of local units 5 are connected. The local units 5 may be connected to the highest hierarchy of the conduit network 2 or to any sub-network 2'. Furthermore, the central unit 1 includes conventional control means 6 for controlling different components of the arrangement, for instance the pumps 3, 3'.

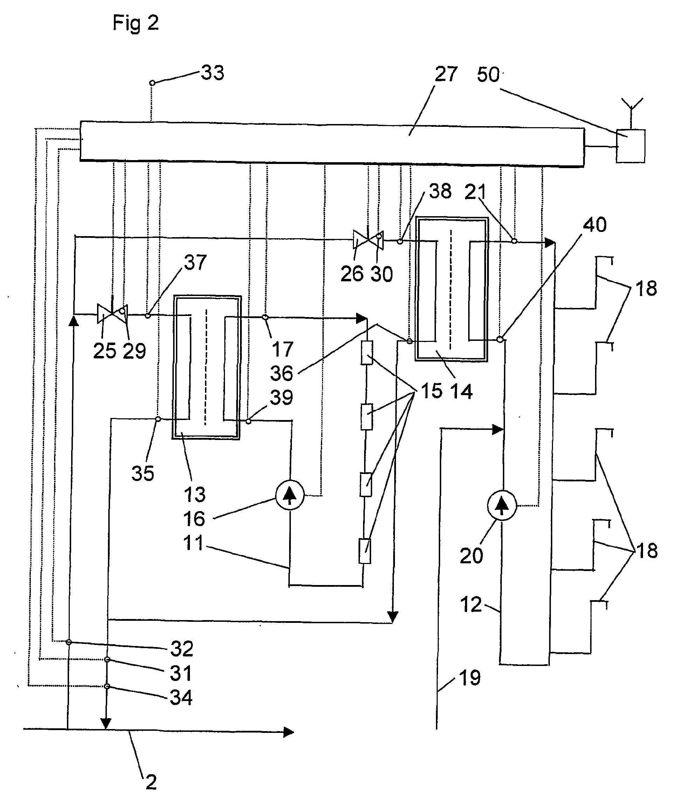

Fig 2 discloses more closely an embodiment of a local unit 5. It is to be noted that the local units 5 may be designed in many various manners within the scope of the present invention as defined in the claims. The local unit 5 includes a first secondary circuit 11 for heating and a second secondary circuit 12 for producing hot tap water. The first secondary circuit 11 is connected to the conduit network 2, 2' via a first heat exchanger 13. The second secondary circuit 12 is connected to the conduit network 2, 2' via a second heat exchanger 14. In the embodiment disclosed, the heat exchanger device of the local unit 5 thus has two heat exchangers 13, 14. However, it is to be noted that more or less heat exchangers may be included in this heat exchanger device. For instance, in the first secondary circuit 11 for heating, the hot primary fluid from the conduit network 2, 2' may be conveyed directly into the radiators 15. It is also possible, for the first secondary circuit 11 and/or the second secondary circuit 12, to provide two after each other connected heat exchangers for providing a pre-heating and a final heating of the secondary fluid in their respective secondary circuit 11, 12. The first secondary circuit 11 includes in addition to the radiators 15 mentioned above, also a circulation pump 16 and a temperature sensor 17. The second secondary circuit 12 includes a number of outlets 18, i.e. different forms of tapping points for hot water. There is also an inlet conduit 19 for the supply of tap water. Also the second secondary circuit 12 includes in the embodiment disclosed a circulation pump 20 and a temperature sensor 21 for sensing the temperature of the exiting secondary fluid. It is to be noted that the secondary circuit 12 does not need to be closed, i.e. there is no re-circulation of tap water via any pump 20.

On the primary side, the local unit 5 also includes means for realising the control of the operation of the local unit 5. These means include two control valves 25 and 26. The control valve 25 is arranged to enable control of the size of the flow of hot primary fluid supplied to the first heat exchanger 13. Such a control may take place by the adjustment of the valve position of the control valve 25. In such a way, the effect supplied to the first secondary circuit 11 may be controlled. In a corresponding manner, the second control valve 26 is arranged to control the size of the flow of the primary fluid supplied to the second heat exchanger 14 by an adjustment of the valve position. The control valves 25, 26 and the pumps 16, 20 are connected to a control member 27. In the embodiment disclosed, there are also sensing members 29 and 30 for sensing the valve positions of the control valves 25 and 26, respectively. The valve positions of the control valves 25, 26 may alternatively be determined directly in the control member 27 as a function of the control signal given to the control valves 25, 26.

Furthermore, the local unit 5 may include pressure sensors 31, 32 for sensing the pressure of the primary fluid entering the local unit 5 and the primary fluid exiting from the local unit 5, respectively. The pressure sensors 31 and 32 are suitably also connected to the control member 27.

Also the temperature sensors 17 and 21 are connected to the control member 27. Furthermore, the local unit may include a number of further temperature sensors, which all are connected to the control member 27. A temperature sensor 33 is arranged to sense the outdoor temperature. A temperature sensor 34 is arranged to sense the temperature of the primary fluid leaving the local unit 5, and two temperature sensors 35 and 36 are arranged to sense the temperature of the primary fluid leaving the first heat exchanger 13 and the second heat exchanger 14, respectively. The two temperature sensors 37 and 38 are arranged to sense the temperature of the primary fluid at the inlet of the first heat exchanger 13 and the inlet of the second heat exchanger 14, respectively. The two temperature sensors 39 and 40 are also arranged to sense the temperature of the secondary fluid immediately before the first heat exchanger 13 and the second heat exchanger 14, respectively.

According to the present invention, at least some of the local units 5 include a communication device 50, which permits communication in two directions between the local units 5. The communication devices 50 are connected to the control member 27. Also the central unit 1 may include such a communication device 50, which is connected to the control means 6, schematically disclosed. Furthermore, for instance the pump 3' for circulating the primary fluid in the sub-network 2' may be controlled via such a communication device 5.

The communication devices of the local units 5 are arranged to communicate information regarding the value of one or some of the parameters, which are provided by means of the temperature sensors 17, 21, 33-40, the sensing members 29, 30 and the pressure sensors 31, 32. In such a way, the control members 27 of the different local units 5 may in their control algorithms consider these parameters not only from the proper local unit 5 but also from one or several of the other local units 5. It is to be noted that these parameters may be a part of other parameters, which for instance are calculated by means of the control members. These calculated parameters, to which the above-mentioned parameters are related, may then be communicated between the different communication devices 50. It is also possible to perform such calculations, of for instance the logarithmic mean temperature difference, in the control member of the receiving local unit 5 or the central unit 1.

However, the control members 27 may also be arranged to control the proper local unit 5 in a conventional manner in so far as no consideration is taken to all these parameters regarding the proper unit but only to the outdoor temperature and the temperature of the secondary fluids. In addition, according to the invention, these parameters regarding the other local units 5 are to be considered.

The communication devices 50 may operate according to communication principles known per se, for instance the communication devices 50 may include means for transferring signals by means of radio waves. The communication devices 50 may also be arranged to communicate via the mobile telephone network. In this case, each local unit 5 may include a sort of mobile phone. The communication devices 50 may also include means for communication via a computer network, for instance the Internet of for instance any public or private intranet. In addition, the communication devices 50 may include means for communication via a network for the distribution of electricity. The communication may be performed via one or several of said communication manners.

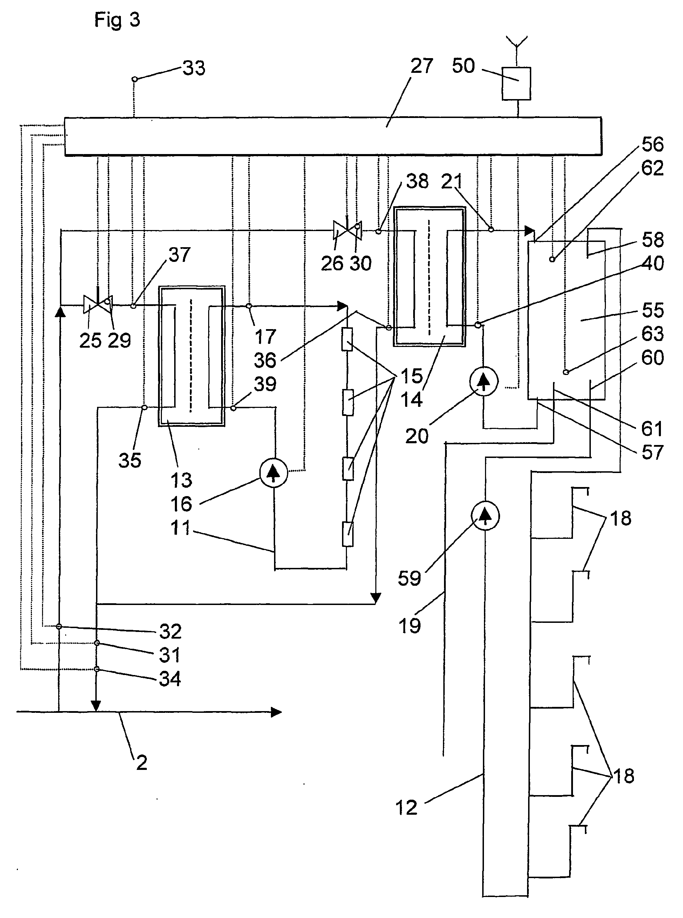

Fig 3 discloses a second embodiment of the local unit 5. This second embodiment differs from the first embodiment in that the second secondary circuit 12 includes an accumulator tank 55 for hot tap water. The hot tap water is fed from the secondary side of the second heat exchanger 14 via a first inlet 56, which is located at a relatively high level. Cold tap water is discharged from the accumulator tank 55 via a first outlet 57, which is located at a relatively low level, and is re-circulated to the second heat exchanger 14 via the pump 20. The tap water to the tap water outlets 18 is taken from a second outlet 58, which is located at a relatively high level and where the tap water in the accumulator tank maintains a relatively high temperature. Tap water, not consumed, may for instance be re-circulated to the accumulator tank 55 by means of a pump 59 and via a second inlet 60, which is located at a relatively low level. Cold tap water may be supplied to the accumulator tank 55 via the inlet conduit 19 and an inlet 61. In the accumulator tank 55, a first temperature sensor 62 for sensing the relatively hot tap water and a second temperature sensor 63 for sensing the relatively cold tap water are provided. The temperature sensors 62, 63 are connected to the control member 27.

If a local unit 5 has a great need of for instance hot water, the flow through the control valve 26 will increase. This need may for instance be detected by sensing the valve position of the control valve 26. The local unit 5 concerned communicates the parameter, showing the valve position of the control valve 26, to one or several of the other local units 5. Any one of these other local units 5 may then during a shorter or longer period of time initiate a reduction of the flow of primary fluid through the first heat exchanger 13 by throttling its control valve 25. In such a way, the total effect output from the conduit network 2, 2' will not increase and the central unit 1 may remain at the same load. Furthermore, the total pressure difference in the conduit network 2, 2' could be maintained at a substantially constant level.

The invention also creates possibilities to communicate other parameters, sensed by the temperature sensors 17, 21, 33-40 and 62, 63, and by the pressure sensors 31, 32. The sensing of the pressure difference over each local unit 5 may advantageously be utilised to maintain a substantially constant level of the total pressure difference of the conduit network 2, 2'. By means of the local pump 3', also the pressure difference over the sub-network 2' may be kept at a substantially constant level. The control member 27 of any of the local units 5 connected to the sub-network 2' may in that connection be arranged to influence the control of the pump 3' with respect to the sensed pressure difference of the local units 5 connected to the sub-network 2' or to the positions of the control valves 25 and 26 of the local units 5. If the valve positions of the local units 5 show that the control valves 25, 26 are in a too open position, the generated pump pressure may be too low, i.e. the pump effect is to be increased. If the valve positions of the local units 5 show that the open position of the control valve 25, 26 is too small, the generated pump pressure may be too high, i.e. the pump effect is too high and may be decreased.

Different parameters may also be communicated to the central unit 1, which also has a communication device 50. If the central unit 1 knows, the valve positions of one or several local units 5, for instance, it may in a better way control the temperature of the district heat water and the pump pressure of the pump 3, and possibly also of the pump 3' for the primary fluid in the sub-network 2'. It is also possible to let the central unit 1 control directly the valve positions of any or some of the local units 5, for instance, by means of the communication devices 50. Through the knowledge, which the central unit 1 thus may obtain via the communication devices 50, there is also information for creating forecastings regarding future heat needs based on historical values of the different parameters, for instance the valve positions at different points of time and in relation to the outdoor temperature.

Furthermore, the accumulator tank 55 may in accordance with the present invention be charged with regard to other local units 5. For instance, the local units 5 may communicate their charge need via parameters, which are related to the temperature sensed by the temperature sensors 62 and 63. In such a way, charging may be obtained to minimise the total load from the different units 5. The charging may for instance take place sequentially for a local unit 5 after another, or during a relatively long time period for several local units 5. Charging may also take place when the instantaneous total need of hot tap water is at the lowest level.

The invention is not limited to the embodiments disclosed but may be varied and modified within the scope of the following claims. It is to be noted that at least two of the local units 5 include a communication device 50 according to the present invention. However, it is an advantage if several local units 5 and preferably substantially all local units have such communication devices 50. The district heating arrangement may thus be improved successively with an increasing number of local units with communication devices 50.

## Claims

1. A district heating arrangement including a heat-producing central unit (1) for providing a hot primary fluid, a number of local units (5), which each includes a heat exchanger device (13, 14), and a conduit network (2, 2'), which extends in a circuit from said heat-producing unit (1), wherein each local unit (5) is connected to said circuit and arranged to receive the hot primary fluid through the heat exchanger device (13, 14), and wherein at least a first and a second of said local units (5) include a respective control unit (27), which includes first means (17, 21, 25-12, 33-40, 62, 63) for providing at least one parameter that is related to the need of hot primary fluid at the local unit (5) concerned and second means (16, 20, 25, 26) for accomplishing the control of the operation of the local unit (5) concerned, wherein said second means includes at least a flow-influencing member (25, 26) for influencing the flow of the hot primary fluid through the local unit (5), wherein the local unit (5) includes a first secondary circuit (11) for heating and wherein the heat exchanger device of the local unit (5) includes a second heat exchanger (14) for a second secondary circuit (12) for producing hot water, and wherein the control unit (27) includes a communication device (50), which permits communication of information regarding said parameter delivered by the first means (17, 21, 29-32, 33-40, 62, 63) at least from the second local unit to the first local unit (5), wherein the control unit (27) of the first local unit (5) is arranged to control the operation of this unit (5), with respect to said parameter regarding the second local unit (5).

2. An arrangement according to claim 1, **characterised in that** the flow-influencing member (25, 26) is arranged to reduce the flow of hot primary fluid through the first local unit (5) if said parameter for the second local unit (5) indicates an increasing need of hot primary fluid of this second unit (5).

3. An arrangement according to any one of claims 1 and 2, **characterised in that** the fluid-influencing member includes a control valve (25, 26).

4. An arrangement according to any one of the preceding claims, **chardcterised in that** the heat exchanger device includes a first heat exchanger (13) for the first secondary circuit (11) for heating, wherein said second means includes a first flow-influencing member (25) for influencing the flow of the hot primary fluid through the first heat exchanger (13) and a second flow-influencing member (26) for influencing the flow of the hot primary fluid through the second heat exchanger (14).

5. An arrangement according to claim 4, **characterised in that** at least the first flow-influencing member (25) of the first local unit (5) is arranged to reduce the flow of the hot primary fluid through the first heat exchanger (13) if said parameter for the second local unit (5) indicates an increasing need of hot primary fluid of this second unit (5).

6. An arrangement according to any one of the preceding claims, **characterised in that** said parameter is related to the size of the flow of the hot primary fluid through the heat exchanger device (13, 14).

7. An arrangement according to claims 3 and 6, **characterised in that** said first means includes a member (27, 29, 30) for providing a valve position of the control valve (25, 26), which is a measure of said size of the flow of the primary fluid, wherein said parameter is related to the valve position.

8. An arrangement according to any one of the preceding claims, **characterised in that** said first means includes a sensor (17, 21, 33-40, 62, 63) for sensing a temperature, wherein said parameter is related to the sensed temperature.

9. An arrangement according to any one of the preceding claims, **characterised in that** said first means includes pressure sensors (31, 32) for sensing a pressure difference between the primary fluid entering the local unit (5) and the primary fluid exiting from the local unit (5), wherein said parameter is related to this pressure difference.

10. An arrangement according to any one of the preceding claims, **characterised in that** said second means includes a flow-influencing member (3') in the form of a pump for circulation of the hot primary fluid.

11. An arrangement according to claim 10, **characterised in that** the control unit (27) of the first local unit (5) is arranged to influence the control of the pump (3') with respect to said parameter of the second local unit in such a way that the size of the flow of the primary fluid through the pump (3') for these two local units (5) is controlled towards a desired value.

12. An arrangement according to any one of the preceding claims, **characterised in that** the central unit (1) includes a communication device (50), which is arranged to permit communication in two directions with at least one of said first and second local units (5).

13. An arrangement according to claims 6 and 12, **characterised in that** at least one of said first and second local units (5) is arranged to communicate said parameter for at least one local unit (5) to the central unit (1).

14. An arrangement according to any one of the preceding claims, **characterised in that** said communication devices (50), includes means for communication by means of radio waves.

15. An arrangement according to claim 14, **characterised in that** said communication devices (50) includes means for communication via a mobile telephone network.

16. An arrangement according to any one of the preceding claims, **characterised in that** said communication devices (50) includes means for communication via a computer network.

17. An arrangement according to any one of the preceding claims, **characterised in that** said communication device (50) includes means for communication via Internet.

18. An arrangement according to any one of the preceding claims, **characterised in that** said communication device (50) includes means for communication via a network for distribution of electricity.

19. A control unit set including at least a first control unit for a first local unit of a district heating arrangement and a second control unit for a second local unit of the district heating arrangement, wherein each local unit (5) includes a.heat exchanger device (13, 14) and is arranged to receive a hot primary fluid through the heat exchanger device, and wherein each control unit includes first means (17, 21, 29-32, 33-40, 62, 63) for providing at least a parameter that is related to the need of hot primary fluid at the respective local unit (5) and second means (16, 20, 25, 26) for accomplishing the control of the operation of the respective local unit (5), wherein said second means includes at least a flow-influencing member (25, 26) for influencing the flow of the hot primary fluid through the local unit (5), wherein each local unit (5) includes a first secondary circuit (11) for heating and wherein the heat exchanger device of the local unit (5) includes a second heat exchanger (14) for a second secondary circuit (12) for producing hot water, and wherein each control unit includes a communication device (50) which is arranged to permit communication in two directions of information regarding said parameter with a communication device (50) of the other local unit (5), wherein each control unit is arranged to control the operation of the respective local unit with respect to a parameter related to the need of hot primary fluid of the other local unit (5).

20. A method of operating a district heating arrangement including a heat-producing central unit for providing a hot primary fluid, at least a first local unit and a second local unit, which each includes a heat exchanger device, and a conduit network, which extends in a circuit from said heat-producing unit, wherein each local unit is connected to said circuit, wherein at least a first and a second of said local units includes a respective control unit, which includes first means for providing at least one parameter and second means including at least a flow-influencing member (25, 26) for influencing the flow of the hot primary fluid through the local unit (5), wherein the local unit (5) includes a first secondary circuit (11) for heating and wherein the heat exchanger device of the local unit (5) includes a second heat exchanger (14) for a second secondary circuit (12) for producing hot water, and wherein the method includes the steps of:
supplying the hot primary fluid to the heat exchanger device of each local unit,
providing at least said parameter related to the need of hot primary fluid at each local unit,
communicating information regarding said parameter between the first and the second local unit and
controlling the operation of the first local unit with respect to said parameter regarding the second local unit with the aid of said flow-influencing member in order to adapt the effect consumption of the first local unit with the effect consumption of the second local unit.

## Patentansprüche

1. Fernheizungsanordnung mit einer wärmeproduzierenden Zentraleinheit (1) zum Liefern eines heißen Primärfluidums, sowie einer Anzahl von lokalen Einheiten (5), von denen jede eine Wärmetauschvorrichtung (13, 14) umfasst, und einem Leitungsnetzwerk (2, 2'), das sich in einem Kreis von der wärmeproduzierenden Einheit (1) erstreckt, wobei jede lokale Einheit (5) mit dem Kreis verbunden ist und das heiße Primärfluidum durch die Wärmetauschvorrichtung (13, 14) empfängt, und wobei mindestens eine erste und eine zweite der lokalen Einheiten (5) jeweils eine Steuereinheit (27) umfassen, die eine erste Einrichtung (17, 21, 29 - 32, 33 - 40, 62, 63) zum Liefern mindestens eines Parameters umfasst, der sich auf den Bedarf des heißen Primärfluidums an der betroffenen lokalen Einheit (5) bezieht, sowie eine zweite Einheit (16, 20, 25, 26) zur Steuerung des Betriebs der betroffenen lokalen Einheit (5), wobei die zweite Einrichtung mindestens ein strömungsbeeinflussendes Element (25, 26) zum Beeinflussen der Strömung des heißen Primärfluidums durch die lokale Einheit (5) umfasst, wobei die lokale Einheit (5) einen ersten Sekundärkreis (11) zum Heizen umfasst, und wobei die Wärmetauschvorrichtung der lokalen Einheit (5) einen zweiten Wärmetauscher (14) für einen zweiten Sekundärkreis (12) zum Produzieren von heißem Wasser umfasst, und wobei die Steuereinheit (27) eine Kommunikationsvorrichtung (50) umfasst, die den Austausch von Informationen in Bezug auf den Parameter erlaubt, der durch die erste Einrichtung (17, 21, 29 - 32, 33 - 40, 62, 63) mindestens von der zweiten lokalen Einheit an die erste lokale Einheit (5) übermittelt wird, wobei die Steuereinheit (27) der ersten lokalen Einheit (5) zur Steuerung des Betriebs dieser Einheit (5) im Hinblick auf den die zweite lokale Einheit (5) betreffenden Parameter dient.

2. Anordnung nach Anspruch 1, **dadurch gekennzeichnet, dass** das strömungsbeeinflussende Element (25, 26) dazu dient, die Strömung des heißen Primärfluidums durch die erste lokale Einheit (5) zu verringern, wenn der Parameter für die zweite lokale Einheit (5) anzeigt, dass ein wachsender Bedarf an heißem Primärfluidum an dieser zweiten Einheit (5) besteht.

3. Anordnung nach einem der Ansprüche 1 und 2, **dadurch gekennzeichnet, dass** das strömungsbeeinflussende Element ein Steuerventil (25, 26) umfasst.

4. Anordnung nach einem der vorangegangenen Ansprüche, **dadurch gekennzeichnet, dass** die Wärmetauschvorrichtung einen ersten Wärmetauscher (13) für den ersten Sekundärkreis (11) zum Heizen umfasst, wobei die zweite Einrichtung ein erstes strömungsbeeinflussendes Element (25) zum Beeinflussen der Strömung des heißen Primärfluidums durch den ersten Wärmetauscher (2) umfasst, sowie ein zweites strömungsbeeinflussendes Element (26) zum Beeinflussen der Strömung des heißen Primärfluidums durch den zweiten Wärmetauscher (14).

5. Anordnung nach Anspruch 4, **dadurch gekennzeichnet, dass** mindestens das erste strömungsbeeinflussende Element (25) der ersten lokalen Einheit (5) dazu dient, die Strömung des ersten Primärfluidums durch den ersten Wärmetauscher (13) zu verringern, wenn der Parameter für die zweite lokale Einheit (5) anzeigt, dass ein wachsender Bedarf an heißem Primärfluidum an dieser zweiten Einheit (5) besteht.

6. Anordnung nach einem der vorangegangenen Ansprüche, **dadurch gekennzeichnet, dass** der Parameter sich auf die Größe der Strömung des heißen Primärfluidums durch die Wärmetauschvorrichtung (13, 14) bezieht.

7. Anordnung nach Anspruch 3 und 6, **dadurch gekennzeichnet, dass** die erste Einrichtung ein Element (27, 29, 30) umfasst, das eine Ventilposition des Steuerventils (25, 26) liefert, was ein Maß für die Größe der Strömung des Primärfluidums ist, wobei der Parameter sich auf die Ventilposition bezieht.

8. Anordnung nach einem der vorangegangenen Ansprüche, **dadurch gekennzeichnet, dass** die erste Einrichtung einen Sensor (17, 21, 33 - 40, 62, 63) zum Erfassen einer Temperatur umfasst, wobei der Parameter sich auf die erfasste Temperatur bezieht.

9. Anordnung nach einem der vorangegangenen Ansprüche, **dadurch gekennzeichnet, dass** die erste Einrichtung Drucksensoren (31, 32) zum Erfassen einer Druckdifferenz zwischen dem in die lokale Einheit (5) eintretenden Primärfluidum und dem aus der lokalen Einheit (5) austretenden Primärfluidum umfasst, wobei der Parameter sich auf diese Druckdifferenz bezieht.

10. Anordnung nach einem der vorangegangenen Ansprüche, **dadurch gekennzeichnet, dass** die zweite Einrichtung ein strömungsbeeinflussendes Element (3') in der Form einer Pumpe zum Umlauf des heißen Primärfluidums umfasst.

11. Anordnung nach Anspruch 10, **dadurch gekennzeichnet, dass** die Steuereinheit (27) der ersten lokalen Einheit (5) dazu dient, die Steuerung der Pumpe (3') im Hinblick auf den Parameter der zweiten lokalen Einheit in einer solchen Weise zu beeinflussen, dass die Größe der Strömung des Primärfluidums durch die Pumpe (3') dieser beiden lokalen Einheiten (5) in Richtung eines gewünschten Werts gesteuert wird.

12. Anordnung nach einem der vorangegangenen Ansprüche, **dadurch gekennzeichnet, dass** die Zentraleinheit (1) eine Kommunikationsvorrichtung (50) umfasst, die dazu dient, eine Kommunikation in beiden Richtungen mit mindestens einer der ersten und zweiten lokalen Einheiten (5) zu ermöglichen.

13. Anordnung nach Anspruch 6 und 12, **dadurch gekennzeichnet, dass** mindestens eine der ersten und zweiten lokalen Einheiten (5) den Parameter für mindestens eine lokale Einheit (5) an die Zentraleinheit (1) kommunizieren kann.

14. Anordnung nach einem der vorangegangenen Ansprüche, **dadurch gekennzeichnet, dass** die Kommunikationsvomchtungen (50) eine Kommunikationseinrichtung mittels Radiowellen umfassen.

15. Anordnung nach Anspruch 14, **dadurch gekennzeichnet, dass** die Kommunikationsvorrichtung (50) eine Kommunikationseinrichtung mittels eines mobilen Telefonnetzwerkes umfasst.

16. Anordnung nach einem der vorangegangenen Ansprüche, **dadurch gekennzeichnet, dass** die Kommunikationsvorrichtung (50) eine Kommunikationseinrichtung über ein Computernetzwerk umfasst.

17. Anordnung nach einem der vorangegangenen Ansprüche, **dadurch gekennzeichnet, dass** die Kommunikationsvorrichtung (50) eine Kommunikationseinrichtung über das Internet umfasst.

18. Anordnung nach einem der vorangegangenen Ansprüche, **dadurch gekennzeichnet, dass** die Kommunikationsvorrichtung (50) eine Kommunikationseinrichtung mittels eines Netzwerks zur Verteilung von Elektrizität umfasst.

19. Steuereinheiten-Satz mit mindestens einer ersten Steuereinheit für eine erste lokale Einheit einer Fernwärmeanordnung und einer zweiten Steuereinheit für eine zweite lokale Einheit der Fernwärmeanordnung, wobei jede lokale Einheit (5) eine Wärmetauschvorrichtung (13, 14) umfasst und ein heißes Primärfluidum durch die Warmetauschvorrichtung empfängt, und wobei jede Steuereinheit eine erste Einrichtung (17, 21, 29 - 32, 33 - 40, 62, 63) zum Liefern mindestens eines Parameters umfasst, der sich auf den Bedarf an heißem Primärfluidum an der jeweiligen Steuereinheit (5) bezieht, sowie eine zweite Einrichtung (16, 20, 25, 26) zum Ermöglichen der Steuerung des Betriebs der jeweiligen lokalen Einheit (5), wobei die zweite Einrichtung mindestens ein strömungsbeeinflussendes Element (25, 26) zum Beeinflussen der Strömung des heißen Primärfluidums durch die lokale Einheit (5) umfasst, wobei jede lokale Einheit (5) einen ersten Sekundärkreis (11) zum Erwärmen umfasst und wobei die Wärmetauschvorrichtung der lokalen Einheit (5) einen zweiten Wärmetauscher (14) für einen zweiten Sekundärkreis (12) zum Produzieren von heißem Wasser umfasst, und wobei jede Steuereinheit eine Kommunikationsvorrichtung (50) umfasst, die dazu dient, eine Kommunikation in beiden Richtungen von Informationen in Bezug auf den Parameter mit einer Kommunikationsvorrichtung (50) der anderen lokalen Einheit (5) zu ermöglichen, wobei jede Steuereinheit dazu dient, den Betrieb der jeweiligen lokalen Einheit im Hinblick auf einen Parameter zu steuern, der sich auf den Bedarf an heißem Primärfluidum der anderen lokalen Einheit (5) bezieht.

20. Verfahren zum Betrieb einer Fernwärmeanordnung mit einer wärmeproduzierenden Zentraleinheit zum Liefern eines heißen Primärfluidums, sowie mindestens einer ersten lokalen Einheit und einer zweiten lokalen Einheit, von denen jede eine Wärmetauschvorrichtung umfasst, und einem Leitungsnetzwerk, das sich in einem Kreis von der wärmeproduzierenden Einheit erstreckt, wobei jede lokale Einheit mit dem Kreis verbunden ist, wobei mindestens eine erste und eine zweite der lokalen Einheiten jeweils eine Steuereinheit umfasst, die eine erste Einrichtung zum Liefern mindestens eines Parameters und eine zweite Einrichtung umfasst, die mindestens ein strömungsbeeinflussendes Element (25, 26) zum Beeinflussen der Strömung des heißen Primärfluidums durch die lokale Einheit (5) umfasst, wobei die lokale Einheit (5) einen ersten Sekundärkreis (11) zum Erwärmen umfasst und wobei die Wärmetauschvorrichtung der lokalen Einheit (5) einen zweiten Wärmetauscher (14) für einen zweiten Sekundärkreis (12) zum Produzieren von heißem Wasser umfasst und wobei das Verfahren die folgenden Schritte umfasst:
Zuführen des heißen Primärfluidums an die Wärmetauschvorrichtung jeder lokalen Einheit,
Liefern von mindestens einem Parameter, der sich auf den Bedarf an heißem Primärfluidum an jeder lokalen Einheit bezieht,
Kommunizieren von Informationen, die sich auf den Parameter beziehen, zwischen der ersten und der zweiten lokalen Einheit und
Steuern des Betriebs der ersten lokalen Einheit im Hinblick auf den Parameter, der sich auf die zweite lokale Einheit bezieht, unter Zuhilfenahme des strömungsbeeinflussenden Elementes, um den effektiven Verbrauch der ersten lokalen Einheit an den effektiven Verbrauch der zweiten lokalen Einheit anzupassen.

## Revendications

1. Système de chauffage central comprenant une unité centrale de production de chaleur (1) pour fournir un fluide principal chaud, un certain nombre d'unités locales (5), qui comprennent chacune un dispositif échangeur de chaleur (13, 14), et un réseau de conduits (2, 2'), qui s'étend dans un circuit à partir de ladite unité de production de chaleur (1), dans lequel chaque unité locale (5) est reliée audit circuit et agencée pour recevoir le fluide principal chaud par le biais du dispositif échangeur de chaleur (13, 14), et dans lequel au moins une première et une seconde desdites unités locales (5) comprennent une unité de commande (27) respective, qui comprend des premiers moyens (17, 21, 29-32, 33-40, 62, 63) pour fournir au moins un paramètre qui est relatif au besoin en fluide principal chaud au niveau de l'unité locale (5) concernée et des seconds moyens (16, 20, 25, 26) pour assurer la commande du fonctionnement de l'unité locale (5) concernée, dans lequel lesdits seconds moyens comprennent au moins un élément influençant l'écoulement (25, 26) pour influencer l'écoulement du fluide principal chaud à travers l'unité locale (5), dans lequel l'unité locale (5) comprend un premier circuit secondaire (11) pour le chauffage et dans lequel le dispositif échangeur de chaleur de l'unité locale (5) comprend un second échangeur de chaleur (14) pour un second circuit secondaire (12) pour produire de l'eau chaude, et dans lequel l'unité de commande (27) comprend un dispositif de communication (50), qui permet de communiquer les informations concernant ledit paramètre fourni par les premiers moyens (17, 21, 29-32, 33-40, 62, 63) au moins de la seconde unité locale à la première unité locale (5), dans lequel l'unité de commande (27) de la première unité locale (5) est agencée pour commander le fonctionnement de cette unité (5), par rapport audit paramètre concernant la seconde unité locale (5).

2. Système selon la revendication 1, **caractérisé en ce que** l'élément influençant l'écoulement (25, 26) est agencé pour réduire l'écoulement de fluide principal chaud à travers la première unité locale (5) si ledit paramètre pour la seconde unité locale (5) indique un besoin croissant en fluide principal chaud de cette seconde unité (5).

3. Système selon l'une quelconque des revendications 1 et 2, **caractérisé en ce que** l'élément influençant le fluide comprend une vanne de commande (25, 26).

4. Système selon l'une quelconque des revendications précédentes, **caractérisé en ce que** le dispositif échangeur de chaleur comprend un premier échangeur de chaleur (13) pour le premier circuit secondaire (11) pour le chauffage, dans lequel lesdits seconds moyens comprennent un premier moyen influençant l'écoulement (25) pour influencer l'écoulement du fluide principal chaud à travers le premier échangeur de chaleur (13) et un second élément influençant l'écoulement (26) pour influencer l'écoulement du fluide principal chaud à travers le second échangeur de chaleur (14).

5. Système selon la revendication 4, **caractérisé en ce qu'**au moins le premier élément influençant l'écoulement (25) de la première unité locale (5) est agencé pour réduire l'écoulement du fluide principal chaud à travers le premier échangeur de chaleur (13) si ledit paramètre pour la seconde unité locale (5) indique un besoin croissant en fluide principal chaud de cette seconde unité (5).

6. Système selon l'une quelconque des revendications précédentes, **caractérisé en ce que** ledit paramètre est relatif à la taille de l'écoulement du fluide principal chaud à travers le dispositif échangeur de chaleur (13, 14).

7. Système selon les revendications 3 et 6, **caractérisé en ce que** lesdits premiers moyens comprennent un élément (27, 29, 30) pour fournir une position de vanne de la vanne de commande (25, 26), qui est une mesure de ladite taille de l'écoulement du fluide principal, dans lequel ledit paramètre est relatif à la position de la vanne.

8. Système selon l'une quelconque des revendications précédentes, **caractérisé en ce que** lesdits premiers moyens comprennent un capteur (17, 21, 33-40, 62, 63) pour détecter une température, dans lequel ledit paramètre est relatif à la température détectée.

9. Système selon l'une quelconque des revendications précédentes, **caractérisé en ce que** lesdits premiers moyens comprennent des capteurs de pression (31, 32) pour détecter une différence de pression entre le fluide principal entrant dans l'unité locale (5) et le fluide principal sortant de l'unité locale (5), dans lequel ledit paramètre est relatif à cette différence de pression.

10. Système selon l'une quelconque des revendications précédentes, **caractérisé en ce que** lesdits seconds moyens comprennent un élément influençant l'écoulement (3') sons la forme d'une pompe pour faire circuler le fluide principal chaud.

11. Système selon la revendication 10, **caractérisé en ce que** l'unité de commande (27) de la première unité locale (5) est agencée pour influencer la commande de la pompe (3') par rapport audit paramètre de la seconde unité locale de telle manière que la taille de l'écoulement du fluide principal à travers la pompe (3') pour ces deux unités locales (5) soit réglée à une valeur souhaitée.

12. Système selon l'une quelconque des revendications précédentes, **caractérisé en ce que** l'unité centrale (1) comprend un dispositif de communication (50) qui est agencé pour permettre une communication dans deux directions avec au moins une desdites première et seconde unités locales (5).

13. Système selon l'une des revendications 6 et 12, **caractérisé en ce qu'**au moins une desdites première et seconde unités locales (5) est agencée pour communiquer ledit paramètre pour au moins une unité locale (5) à l'unité centrale (1).

14. Système selon l'une quelconque des revendications précédentes, **caractérisé en ce que** lesdits dispositifs de communication (50) comprennent des moyens pour communiquer au moins d'ondes radio.

15. Système selon la revendication 14, **caractérisé en ce que** lesdits dispositifs de communication (50) incluent des moyens pour communiquer via un réseau de téléphonie mobile.

16. Système selon l'une quelconque des revendications précédentes, **caractérisé en ce que** lesdits dispositifs de communication (50) comprennent des moyens pour communiquer via un réseau informatique.

17. Système selon l'une quelconque des revendications précédentes, **caractérisé en ce que** ledit dispositif de communication (50) comprend des moyens pour communiquer via Internet.

18. Système selon l'une quelconque des revendications précédentes, **caractérisé en ce que** ledit dispositif de communication (50) comprend des moyens pour communiquer via un réseau de distribution d'électricité.

19. Ensemble d'unités de commande comprenant au moins une première unité de commande pour une première unité locale d'un système de chauffage central et une seconde unité de commande pour une seconde unité locale du système de chauffage central, dans lequel chaque unité locale (5) comprend un dispositif échangeur de chaleur (13, 14) et est agencée pour recevoir un fluide principal chaud à travers le dispositif échangeur de chaleur, et dans lequel chaque unité de commande comprend des premiers moyens (17, 21, 29-32, 33-40, 62, 63) pour fournir au moins un paramètre qui est relatif au besoin en fluide principal chaud au niveau de l'unité locale respective (5) et des seconds moyens (16, 20, 25, 26) pour assurer la commande du fonctionnement de l'unité locale respective (5), dans lequel lesdits seconds moyens comprennent au moins un moyen influençant l'écoulement (25, 26) pour influencer l'écoulement du fluide principal chaud à travers l'unité locale (5), dans lequel chaque unité locale (5) comprend un premier circuit secondaire (11) pour le chauffage et dans lequel le dispositif échangeur de chaleur de l'unité locale (5) comprend un second échangeur de chaleur (14) pour un second circuit secondaire (12) pour produire de l'eau chaude, et dans lequel chaque unité de commande comprend un dispositif de communication (50) qui est agencé pour permettre de communiquer dans deux directions des informations concernant ledit paramètre à un dispositif de communication (50) de l'autre unité locale (5), dans lequel chaque unité de commande est agencée pour commander le fonctionnement de l'unité locale respective par rapport à un paramètre relatif au besoin en fluide principal chaud de l'autre unité locale (5).

20. Procédé de fonctionnement d'un système de chauffage central comprenant une unité centrale de production de chaleur pour fournir un fluide principal chaud, au moins une première unité locale et une seconde unité locale, qui comprennent chacune un dispositif échangeur de chaleur, et un réseau de conduits, qui s'étend dans un circuit à partir de ladite unité de production de chaleur, dans lequel chaque unité locale est reliée audit circuit, dans lequel au moins une première et une seconde desdites unités locales comprend une unité de commande respective, qui comprend des premiers moyens pour fournir au moins un paramètre et des seconds moyens comprenant au moins un élément influençant l'écoulement (25, 26) pour influencer l'écoulement du fluide principal chaud à travers l'unité locale (5), dans lequel l'unité locale (5) comprend un premier circuit secondaire (11) pour le chauffage et dans lequel le dispositif échangeur de chaleur de l'unité locale (5) comprend un second échangeur de chaleur (14) pour un second circuit secondaire (12) pour produire de l'eau chaude, et dans lequel le procédé comprend les étapes consistant à :
alimenter en fluide principal chaud le dispositif échangeur de chaleur de chaque unité locale ;
fournir au moins ledit paramètre relatif au besoin en fluide principal chaud au niveau de chaque unité locale,
communiquer des informations concernant ledit paramètre entre la première et la seconde unité locale et
commander le fonctionnement de la première unité locale par rapport audit paramètre concernant la seconde unité locale à l'aide dudit élément influençant l'écoulement afin d'adapter la consommation effective de la première unité locale à la consommation effective de la second unité locale.
